# EUROPÄISCHE PATENTSCHRIFT

(11) **EP 0 376 158 B1**
(45) Veröffentlichungstag und Bekanntmachung des Hinweises auf die Patenterteilung: **02.03.1994**
(21) Anmeldenummer: 89123638.2
(22) Anmeldetag: 21.12.1989
(51) Int. Cl.: C09B 3/60, C09B 67/22, C08K 5/08

(54) **Mischkristallpigmente der Anthanthronreihe, Verfahren zu ihrer Herstellung und ihre Verwendung**
Mixed-crystal pigments of the anthanthrone series, methods for their preparation and their use
Solution solide cristalline de pigments du type anthanthrone, leurs procédés de préparation et leur application

(30) Priorität: 28.12.1988 DE 3844063
(43) Veröffentlichungstag der Anmeldung: 04.07.1990
(73) Patentinhaber: HOECHST AKTIENGESELLSCHAFT, 65926 Frankfurt am Main (DE)
(72) Erfinder: Dietz, Erwin, Dr., D-6233 Kelkheim (Taunus) (DE); Urban, Manfred, D-6200 Wiesbaden (DE)

(56) Entgegenhaltungen:
- DE-A- 3 520 806
- DE-C- 478 738
- FR-A- 965 668

## Beschreibung

Die vorliegende Erfindung betrifft neue Mischkristallpigmente der Anthanthronreihe, Verfahren zu ihrer Herstellung und ihre Verwendung zum Färben von hochmolekularen organischen Materialien.

Anthanthrone sind bekannte Verbindungen, die als Pigmente und Küpenfarbstoffe verwendet werden. Sie können hergestellt werden durch Cyclisierung der entsprechenden 1,1'-Dinaphthyl-8,8'-dicarbonsäuren gemäß DE-PS 507338 oder durch nachträgliche Halogenierung von Anthanthron gemäß DE-PS 458598 und Fiat Final Report 1313 II.

In DE-A1-35 20 806 ist ein Verfahren zur Herstellung von Pigmenten der Anthanthronreihe offenbart, bei dem die Anthanthrone in Form des Rohpigments zunächst in wäßrigalkalischem Medium in die Leukoform überführt, diese durch Ansäuern abgeschieden werden und die wäßrige Suspension der Leukoform zu den Anthanthronen reoxydiert wird.

Durch die Mischkristallbildung läßt sich der Anwendungsbereich der Anthanthronpigmente wesentlich erweitern. Die Eigenschaften der Mischkristallpigmente unterscheiden sich erheblich von den entsprechenden mechanischen Mischungen der Einzelkomponenten. Sie besitzen insbesondere reinere Farbtöne und weisen höhere Farbstärken auf. Es werden Farbtöne erhalten, die mit den Einzelkomponenten nicht eingestellt werden können. Die Echtheiten sind ausgezeichnet.

Es wurde gefunden, daß zwei oder mehr verschieden substituierte Anthanthrone unter Bildung von Mischkristallen oder festen Lösungen miteinander vereinigt werden können. Unter Mischkristallen versteht man dabei, daß eine oder mehrere zugesetzte Komponenten im Kristallgitter einer Wirtverbindung vorliegen. Das Röntgenbeugungsdiagramm eines Mischkristalls zeigt dann nur das (in vielen Fällen aufgeweitete) Kristallgitter der Wirtverbindung, während im Röntgenbeugungs-Diagramm der entsprechenden mechanischen Mischung alle Komponenten nachweisbar sind.

Gegenstand der Erfindung sind daher Mischkristallpigmente der Anthanthronreihe aus zwei oder mehr Verbindungen der allgemeinen Formel I 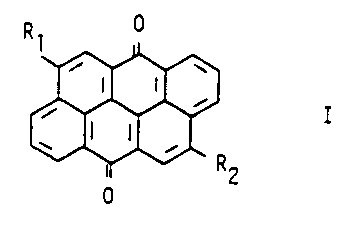
in welcher R₁, R₂ Wasserstoff, Chlor, Brom, Iod oder die Gruppen Nitro, Cyano, Amino, Hydroxy, C₁-C₄-Alkyl, C₁-C₄-Alkoxy, Aryloxy, beispielsweise Phenoxy, das durch Halogen, beispielsweise Chlor oder Brom, oder C₁-C₄-Alkyl substituiert sein kann, C₁-C₄-Alkylsulfonyl, Benzylsulfonyl, das durch Halogen, beispielsweise Chlor oder Brom, oder C₁-C₄-Alkyl substituiert sein kann, Acetoxy, Anilino, das durch Halogen, beispielsweise Chlor oder Brom, C₁-C₄-Alkyl oder halogenhaltiges, beispielsweise chlor-oder bromhaltiges Alkyl substituiert sein kann, Naphthindonylamino oder Phthalimido bedeuten, wobei jede Komponente in einer Menge von 1 bis 99 %, vorzugsweise von 70 bis 95 %, vorliegt und R₁ und R₂ gleich oder verschieden sein können.

Bevorzugte Mischkristallpigmente sind solche, die zwei oder mehr Verbindungen der allgemeinen Formel I enthalten, worin R₁, R₂ Chlor, Brom, Iod, Methoxy oder Ethoxy bedeuten, wobei R₁ und R₂ gleich oder verschieden sein können.

Bei der Synthese fallen die Verbindungen der genannten allgemeinen Formel I als Anthanthronrohpigmente an. Sie werden hergestellt durch Cyclisierung der entsprechenden 1,1′-Dinaphthyl-8,8′-dicarbonsäuren oder von Mischungen verschieden substituierter 1,1′-Dinaphthyl-8,8′-dicarbonsäuren oder durch nachträgliche Halogenierung oder Nitrierung von Anthanthron.

Die erfindungsgemäßen Mischkristallpigmente können wie folgt hergestellt werden:
Zwei oder mehr fein- oder grobkristalline Anthanthronrohpigmente oder grobkristalline Anthanthronmischkristallrohpigmente der genannten allgemeinen Formel I werden zunächst durch
(1) Umküpen aus wäßriger Lösung oder Suspension bei Temperaturen von etwa 0 bis etwa 80°C,
(2) Perlmahlung in Wasser oder Lösungsmitteln, wie beispielsweise in Alkanolen (C₂-C₆), beispielsweise in Ethanol, Propanol, Isopropanol, n-Butanol oder Isobutanol, oder in aromatischen Kohlenwasserstoffen, beispielsweise in Toluol, Xylolen oder Ethylbenzol,
(3) Trockenmahlung mit oder ohne Salzzusatz, wie beispielsweise Natriumsulfat, Natriumchlorid, Calciumchlorid oder Aluminiumsulfat,
(4) Auflösen in konzentrierter anorganischer Säure und Ausfällen durch Eingießen in Wasser,oder
(5) geeignete Syntheseführung, bei welcher die Reaktionsbedingungen so gewählt werden, daß die Anthanthronpigmente nach der Synthese gelöst vorliegen und durch Eingießen in Wasser ausgefällt werden (DE-PS 507 338, DE-PS 458 598),
vorzugsweise durch Methoden (1) und (2), in die entsprechenden feinteiligen Anthanthronmischkristallrohpigmente übergeführt und diese anschließend durch einen Finish in einem inerten organischen Lösungsmittel oder in einer verdünnten anorganischen Säure bei Temperaturen von jeweils etwa 50 bis etwa 200°C, vorzugsweise von etwa 80 bis etwa 160°C, und gegebenenfalls unter Schereinwirkung, in die Anthanthronmischkristallpigmente der vorstehend genannten allgemeinen Formel I umgewandelt.

Der Finish in einem inerten Lösungsmittel kann auch unter Druck durchgeführt werden.

Beim Finish werden vorzugsweise organische Lösungsmittel verwendet, deren Siedepunkt über 60°C liegt. Als Lösungsmittel kommen hierbei beispielsweise in Frage Alkanole (C₁-C₁₀), wie Methanol, Ethanol, Propanol, Isopropanol, n- oder Isobutanol; Dialkyl (C₁-C₆) oder cyclische Ketone, wie beispielsweise Aceton, Diethylketon, Methylethylketon oder Cyclohexanon; Ether und Glykolether, wie beispielsweise Methoxybutanol; aromatische Kohlenwasserstoffe, wie beispielsweise Toluol, Xylole oder Ethylbenzol; aromatische Chlorkohlenwasserstoffe, wie beispielsweise Chlorbenzol, o-Dichlorbenzol, 1,2,4-Trichlorbenzol oder Brombenzol; aromatische Nitroverbindungen, wie beispielsweise Nitrobenzol oder Nitrophenol; aliphatische Carbonsäureamide, wie beispielsweise Formamid oder Dimethylformamid; cyclische Carbonsäureamide, wie beispielsweise N-Methylpyrrolidon; Carbonsäure (C₁-C₄)-alkyl-(C₁-C₄)-ester, wie beispielsweise Ameisensäurebutylester, Essigsäureethylester oder Propionsäurepropylester, oder Benzoesäurealkyl-(C₁-C₄)-ester, wie beispielsweise Benzoesäureethylester; heterocyclische Basen, wie beispielsweise Pyridin, Morpholin, Picoline sowie Dimethylsulfoxid und Sulfolan.

Bevorzugte organische Lösungsmittel für den Finish sind Alkanole von 2 bis 6 Kohlenstoffatomen, wie beispielsweise Ethanol, Propanol, Isopropanol, n-Butanol, Isobutanol und Pentanole; aromatische Kohlenwasserstoffe, wie beispielsweise Xylole, Ethylbenzol oder Cumol sowie aromatische Nitroverbindungen, wie Nitrobenzol oder Nitrophenol.

Bewährt hat sich auch der Finish in verdünnten anorganischen Säuren, insbesondere in verdünnter Schwefelsäure.

Die Feinverteilungs- und Finishverfahren können auch in Gegenwart von oberflächenaktiven Mitteln durchgeführt werden. Als oberflächenaktive Verbindung kommen hierbei anionische, kationische, nichtionische und/oder amphotere Tenside in Frage.

Der Finish kann in Rührgefäßen erfolgen. Er kann jedoch auch unter Einwirkung von Scherkräften in Mahlapparaturen oder Knetaggregaten durchgeführt werden.

Der Nachweis der Mischkristallbildung wird über die Röntgenbeugung erbracht. Die Eigenschaften der Mischkristallpigmente unterscheiden sich deutlich von den entsprechenden mechanischen Mischungen. Die mittlere Teilchengröße der Mischkristallpigmente liegt zwischen 0,05 und 0,5 µm. Sie besitzen hervorragende coloristische Eigenschaften und eine ausgezeichnete Wetterechtheit. Durch die Mischkristallbildung läßt sich der Anwendungsbereich dieser Pigmente wesentlich erweitern.

Die beim erfindungsgemäßen Verfahren u.a. als Ausgangsverbindungen eingesetzten grobkristallinen Anthanthronmischkristallrohpigmente können hergestellt werden, indem man zwei oder mehr Anthanthronrohpigmente in einem inerten organischen Lösungsmittel in der Wärme löst und durch Abkühlen wieder auskristallisieren läßt. Geeignete organische Lösungsmittel sind hierbei beispielsweise Säureamide, wie Dimethylformamid, N-Methylpyrrolidon; aromatische Heterocyclen, wie Pyridin oder Chinolin; schwefelhaltige Lösungsmittel, wie Dimethylsulfoxyd; Halogenaromaten, wie Trichlorbenzole, α-Chlornaphthalin; Nitroaromaten, wie Nitrobenzol, Nitrochlorbenzole oder Nitrophenole; und sonstige Saromatische Lösungsmittel, wie Phenol oder Benzoesäureester.

Die erfindungsgemäßen Mischkristallpigmente können je nach Wahl der Finishbedingungen in transparenter oder deckender Form hergestellt werden. Sie eignen sich zum Pigmentieren von hochmolekularen natürlichen oder synthetischen organischen Materialien, wie beispielsweise Celluloseether oder -ester, wie Ethylcellulose, Nitrocellulose, Celluloseacetat oder Cellulosebutyrat, natürliche Harze oder Kunstharze, wie Polymerisationsharze oder Kondensationsharze, wie beispielsweise Aminoplaste, insbesondere Harnstoff- oder Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß zu verwendenden Pigmente als Toner oder in Form von Präparationen oder Dispersionen einzusetzen. Bezogen auf das zu pigmentierende hochmolekulare organische Material setzt man die erfindungsgemäß hergestellten Mischkristallpigmente in einer Menge von vorzugsweise 0,1 bis 10 Gew.-% ein.

Die erfindungsgemäß hergestellten Mischkristallpigmente eignen sich besonders für den Einsatz in Einbrennlacksystemen, wie beispielsweise in Alkyd-Melamin-Harzlacken oder Acrylmelaminharzlacken, Zweikomponentenlacksystemen auf Basis polyisocyanatvernetzbarer Acrylharze und wäßriger Lacksysteme. Nach der Einarbeitung werden farbstarke, reine und glänzende Lackierungen mit sehr guter Wetterechtheit erhalten. Die Mischkristallpigmente besitzen in modernen Lacksystemen ein sehr gutes Fließverhalten, auch bei hohen Pigmentkonzentrationen bei gleichzeitig hervorragender Flockungsstabilität. Auch für den Einsatz in Kunststoffen sind diese Mischkristallpigmente hervorragend geeignet, insbesondere für Polyolefine, wie Polyethylen, Polypropylen, Polyvinylchlorid oder Polystyrol. In diesen Kunststoffen sind die Mischkristallpigmente sehr gut verteilbar und liefern brillante und farbstarke Ausfärbungen.

Bei Anwendung in Druckfarben werden farbstarke und hochglänzende Drucke erhalten. Von der Vielzahl der Druckfarben haben sich Druckfarben auf Basis Nitrocellulose besonders gut bewährt.

Zur Beurteilung der Eigenschaften der beanspruchten Mischkristallpigmente in Lacksystemen wurden aus der Vielzahl der bekannten Systeme ein Alkyd-Melaminharz-Lack (AM6) auf Basis eines mittelöligen, nichttrocknenden Alkydharzes aus synthetischen Fettsäuren und Phthalsäureanhydrid ausgewählt. Die Rheologie des Mahlguts nach der Dispergierung (Millbase-Rheologie) wird anhand der folgenden fünfstufigen Skala beurteilt:

| | |
|---|---|
| 5 dünnflüssig | 2 leicht gestockt |
| 4 flüssig | 1 gestockt |
| 3 dickflüssig | |

Nach dem Verdünnen des Mahlguts auf die Pigmentanwendungskonzentration wurde die Viskosität mit dem Viskospatel nach Rossmann, Typ 301, der Firma Erichsen beurteilt. Glanzmessungen erfolgten unter einem Winkel von 20° nach DIN 67350 (ASTMD 523) mit dem "multigloss"-Glanzmeßgerät der Firma Byk-Mallinckrodt. In den nachstehenden Beispielen bedeuten Teile Gewichtsteile und Prozente Gewichtsprozente.

### Beispiel 1

8,75 g Dibromanthanthronrohpigment, hergestellt durch Bromierung von Anthanthron, und 3,75 g Diiodanthanthron, hergestellt durch Iodierung von Anthanthron, werden in 5 l Nitrobenzol eingetragen, bei Siedetemperatur gelöst und heiß abfiltriert. Nach Abkühlenlassen wird abgesaugt, mit Nitrobenzol gewaschen, anschließend mit Ethanol nitrobenzolfrei gewaschen und bei 80°C getrocknet. Man erhält 11,73 g hochkristallines Mischkristallrohpigment, dessen Röntgenbeugungsspektrum sich vom Röntgenbeugungsspektrum der entsprechenden mechanischen Mischung der oben genannten Ausgangsprodukte unterscheidet.

### Beispiel 2

8,0 g Diethoxyanthanthronrohpigment, hergestellt durch Cyclisierung von 1,1′-Dinaphthyl-4,4′-diethoxy-8,8′-dicarbonsäure, und 2,0 g Dimethoxyanthanthron, hergestellt durch Cyclisierung von 1,1′-Dinaphthyl-4,4′-dimethoxy-8,8′-dicarbonsäure, werden in 5 l Nitrobenzol eingetragen, bei Siedetemperatur gelöst und heiß abfiltriert. Nach Abkühlenlassen wird abgesaugt, mit Nitrobenzol gewaschen, anschließend mit Ethanol nitrobenzolfrei gewaschen und bei 80°C getrocknet.

Man erhält 8,44 g hochkristallines Mischkristallrohpigment, dessen Röntgenbeugungsspektrum sich vom Röntgenbeugungsspektrum der entsprechenden mechanischen Mischung der oben genannten Ausgangsprodukte unterscheidet.

### Beispiel 3

Zu vorgelegten 250 ml Wasser werden 15 g Natriumdithionit und 0,25 g eines handelsüblichen Dispergiermittels auf Basis Alkylphenolpolyglykolethersulfat gegeben. In die erhaltene Lösung werden 9,0 g Dibromanthanthronrohpigment, hergestellt durch Bromierung von Anthanthron, und 1,0 g Diiodanthanthronrohpigment, hergestellt durch Iodierung von Anthanthron, eingetragen. Dann tropft man bei 20 - 25°C 20 g Natronlauge 33 %ig zu, wobei sich ein pH-Wert von 12,7 einstellt. Anschließend wird 1 Stunde bei 20 - 25°C nachgerührt. Nach einstündigem Nachrühren werden in 15 Minuten 5,85 g Phosphorsäure 85 %ig zugetropft, bis sich ein pH-Wert von 10 - 11 eingestellt hat. Dann rührt man 1 Stunde bei 20 - 25°C nach und läßt bei pH 10 - 11 gleichzeitig 22,5 g Perhydrol 35 %ig und 12,3 g Natronlauge 33 %ig zutropfen. Nach beendetem Zulauf wird 15 Stunden bei 20 - 25°C nachgerührt, abgesaugt und neutral gewaschen.

Der so erhaltene Preßkuchen wird mit einer Lösung aus 54,1 ml Wasser und 0,7 g Natriumcarbonat wasserfrei angerührt. Nach Zugabe von 10 g Nitrobenzol wird 3 Stunden zum Sieden erhitzt. Anschließend wird das Nitrobenzol mit Wasserdampf abdestilliert, das Mischkristallpigment abgesaugt, neutral gewaschen und bei 80°C getrocknet.

Man erhält 9,85 g Mischkristallpigment, dessen Röntgenbeugungsspektrum sich vom Röntgenbeugungsspektrum der entsprechenden mechanischen Mischung der oben genannten Ausgangsprodukte deutlich unterscheidet. Im AM6-Lack erhält man mit dem Mischkristallpigment transparente, helle, farbstarke Lackierungen, während die Lackierungen mit der mechanischen Mischung sehr dunkel und trüb sind.

### Beispiel 4

Zu vorgelegten 2000 ml Wasser werden 120 g Natriumdithionit und 2 g eines handelsüblichen Dispergiermittels auf Basis Alkylphenolpolyglykolethersulfat gegeben. In die erhaltene Lösung werden 64 g Dibromanthanthronrohpigment, hergestellt durch Bromierung von Anthanthron, und 16 g Diiodanthanthronrohpigment, hergestellt durch Iodierung von Anthanthron, eingetragen. Man tropft bei 20 - 25°C 160 g Natronlauge 33 %ig zu, wobei sich ein pH-Wert von 12,5 einstellt. Nach einstündigem Nachrühren bei 20 - 25°C werden in 15 Minuten 49,2 g Phosphorsäure 85 %ig zugetropft, bis sich ein pH-Wert von 10 - 11 eingestellt hat. Man rührt 1 Stunde bei 20 - 25°C nach und läßt dann bei pH 10 - 11 gleichzeitig 180 g Perhydrol 35 %ig und 100,5 g Natronlauge 33 %ig zutropfen. Nach beendetem Zulauf wird 15 Stunden bei 20 - 25°C nachgerührt, dann abgesaugt und schließlich neutral gewaschen.

Der so erhaltene Preßkuchen wird mit einer Lösung aus 419 ml Wasser und 5,6 g Natriumcarbonat wasserfrei angerührt. Nach Zugabe von 80 g Nitrobenzol wird 3 Stunden zum Sieden erhitzt. Anschließend wird das Nitrobenzol mit Wasserdampf abdestilliert, das Mischkristallpigment abgesaugt, neutral gewaschen und bei 80°C getrocknet.

Man erhält 79,8 g Mischkristallpigment, dessen Röntgenbeugungsspektrum sich vom Röntgenbeugungsspektrum der entsprechenden mechanischen Mischung der oben genannten Ausgangsprodukte unterscheidet.

Im AM6-Lack erhält man mit dem Mischkristallpigment helle, farbstarke Lackierungen, während die Lackierungen mit der mechanischen Mischung sehr dunkel und trüb sind.

### Beispiel 5

Zu vorgelegten 2000 ml Wasser werden 120 g Natriumdithionit und 2 g eines handelsüblichen Dispergiermittels auf Basis Alkylphenolpolyglykolethersulfat gegeben. In die erhaltene Lösung werden dann 64 g Dibromanthanthronrohpigment, hergestellt durch Bromierung von Anthanthron, und 16 g Dichloranthanthronrohpigment, hergestellt durch Chlorierung von Anthanthron, eingetragen. Man tropft bei 20 - 25°C 160 g Natronlauge 33 %ig zu, wobei sich ein pH-Wert von 12,8 einstellt. Nach einstündigem Nachrühren bei 20 - 25°C läßt man in 15 Minuten 47,9 g Phosphorsäure 85 %ig zutropfen, bis sich ein pH-Wert von 10 - 11 eingestellt hat. Man rührt 1 Stunde bei 20 - 25°C nach und läßt dann bei pH 10 - 11 gleichzeitig 180 g Perhydrol 35 %ig und 99,4 g Natronlauge 33 %ig zutropfen. Nach beendetem Zulauf wird 15 Stunden bei 20 - 25°C nachgerührt, dann abgesaugt und schließlich neutral gewaschen.

Der so erhaltene Preßkuchen wird mit einer Lösung aus 48,9 ml Wasser und 5,6 g Natriumcarbonat wasserfrei angerührt. Nach Zugabe von 80 g Nitrobenzol wird 3 Stunden zum Sieden erhitzt. Anschließend wird das Nitrobenzol mit Wasserdampf abdestilliert, das Mischkristallpigment abgesaugt, neutral gewaschen und bei 80°C getrocknet.

Man erhält 79,6 g Mischkristallpigment, dessen Röntgenbeugungsspektrum sich vom Röntgenbeugungsspektrum der entsprechenden mechanischen Mischung der oben genannten Ausgangsprodukte unterscheidet.

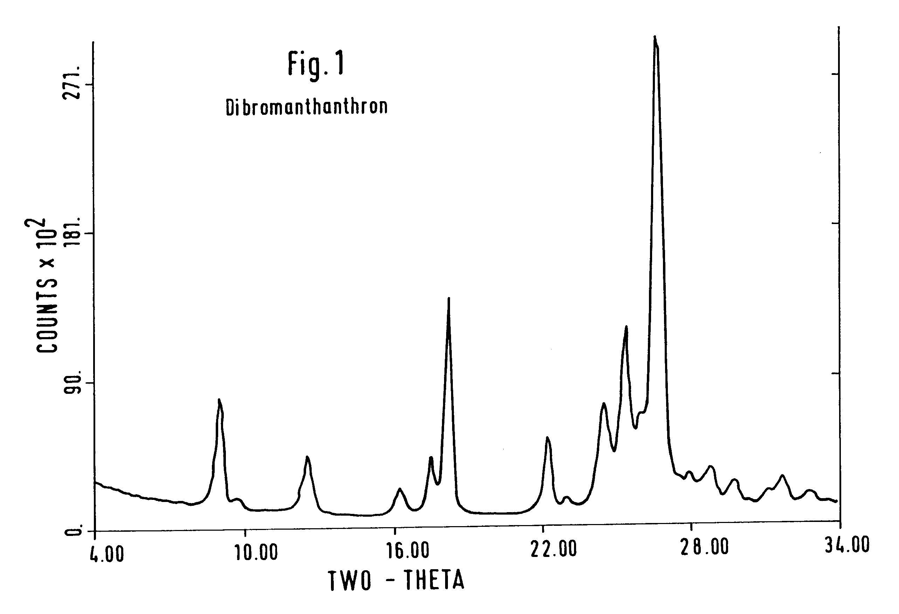

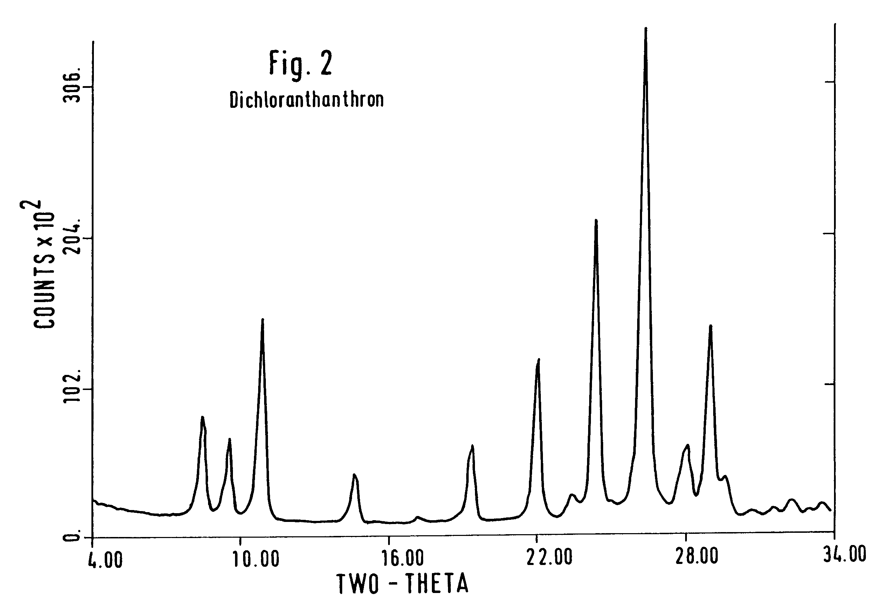

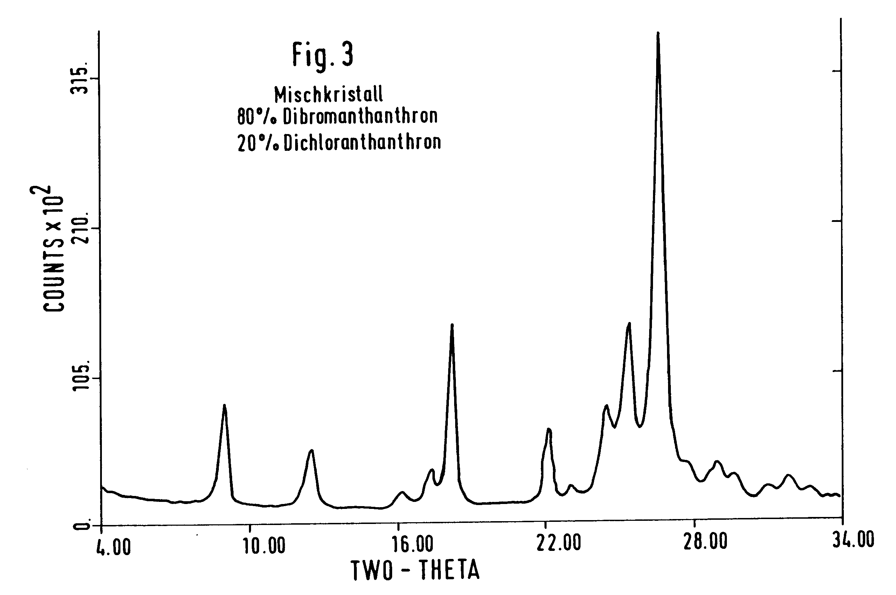

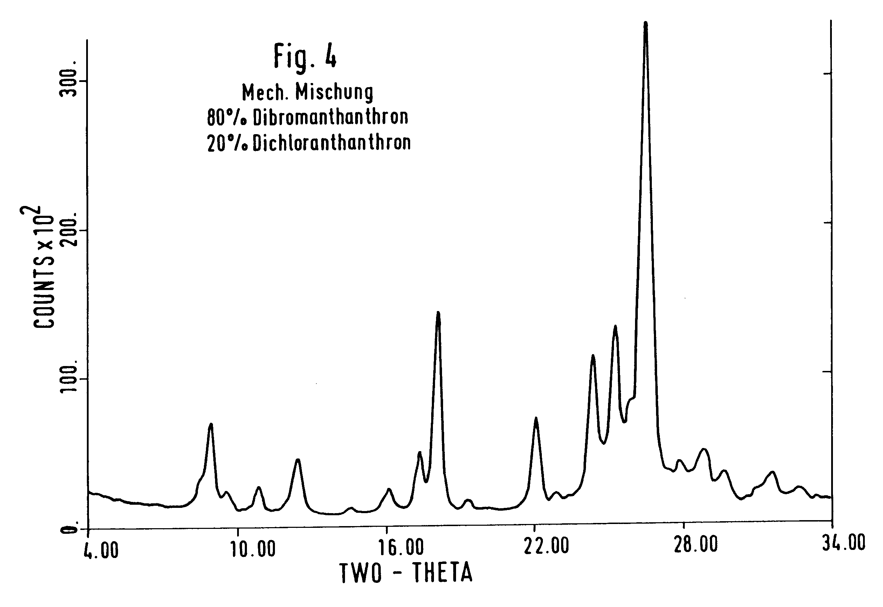

Die Röntgenbeugungsspektren der Ausgangsprodukte sowie des Mischkristallpigments und der entsprechenden mechanischen Mischung sind im Anhang (vgl. Figur 1-4) dargestellt.

Im AM6-Lack erhält man sehr transparente, helle und farbstarke Lackierungen, während die Lackierungen mit der mechanischen Mischung deckender und trüber sind.

Die Wetterechtheit des Mischkristallpigments ist ausgezeichnet und die Überlackierechtheit ist einwandfrei.

Bei der Ausprüfung im TSA-NAD-Lack erhält man transparente, farbstarke und reine Lackierungen. Die Millbase-Rheologie wird mit 3-4 bewertet und der Glanz mit 79. Die Viskosität des 5 %igen Lackes beträgt 3,9".

### Beispiel 6

40 g Dibromanthanthronrohpigment, hergestellt durch Bromierung von Anthanthron, und 10 g Dichloranthanthronrohpigment, hergestellt durch Chlorierung von Anthanthron, werden zusammen jeweils in Form des feuchten Preßkuchens mit 81 ml Wasser angerührt. Anschließend füllt man diese Suspension in eine Perlmühle Typ Drais PM 1, die mit 1600 g Zirkonoxid-Perlen ⌀ 1,0 - 1,5 mm gefüllt ist, und mahlt 2 Stunden bei 2800 Upm. Danach wird das Mahlgut abgesiebt und die Zirkonoxidperlen mit Wasser abgespült. Man saugt die Pigmentsuspension ab und wäscht mit Wasser nach. Der Filterkuchen wird mit soviel Wasser angerührt, daß das Gewicht der Suspension 250 g beträgt. Danach gibt man 50 g Isobutanol 100 %ig zu und erhitzt 3 Stunden zum Sieden. Anschließend destilliert man das Isobutanol bis 100°C am Übergang ab, saugt bei 50°C ab, wäscht mit Wasser nach und trocknet bei 80°C. Man erhält 47,6 g Mischkristallpigment, dessen Röntgenbeugungsspektrum sich vom Röntgenbeugungsspektrum der entsprechenden mechanischen Mischung der oben genannten Ausgangsprodukte unterscheidet.

Im AM6-Lack erhält man sehr deckende, helle, reine und farbstarke Lackierungen. Bei der Ausprüfung in Polyvinylchlorid erhält man farbstarke und reine Ausfärbungen.

### Beispiel 7

24 g Dibromanthanthronrohpigment, hergestellt durch Bromierung von Anthanthron, und 6 g Dichloranthanthronrohpigment, hergestellt durch Chlorierung von Anthanthron, werden in eine 1 l-Kunststoffmühle gegeben, die mit 1400 g Cylpebs ⌀ 10-12 mm gefüllt ist. Danach wird 6 Stunden auf einer Schwingmühle (Typ Vibratom, Siebtechnik Mülheim) gemahlen. Anschließend wird das Mahlgut abgesiebt. Man erhält 23,8 g Mahlgut.

23,8 g Mahlgut werden in 80 g Isobutanol 100 %ig eingetragen und danach 0,4 g eines handelsüblichen Dispergiermittels auf Basis Alkylphenolpolyglykolethersulfat zugegeben. Man rührt 15 Stunden bei 20 - 25°C nach und gibt dann 300 ml Wasser zu. Es wird 3 Stunden zum Sieden erhitzt, danach das Isobutanol bis 100°C am Übergang abdestilliert, abgesaugt, mit Wasser gewaschen und bei 80°C getrocknet.

Man erhält 22,5 g Mischkristallpigment, dessen Röntgenbeugungs spektrum sich vom Röntgenbeugungs spektrum der entsprechenden mechanischen Mischung der oben genannten Ausgangsprodukte unterscheidet.

Im AM6-Lack erhält man mit dem Mischkristallpigment transparente und farbstarke Lackierungen.

### Beispiel 8

40 g Dibromanthanthronrohpigment, hergestellt durch Bromierung von Anthanthron und 10 g Dichloranthanthronrohpigment, hergestellt durch Chlorierung von Anthanthron, werden bei 20 - 25°C in 400 g 100 %ige Schwefelsäure eingetragen und gelöst. Diese Lösung wird auf 2000 g Eiswasser gegeben, abgesaugt und mit Wasser neutral gewaschen.

Der Filterkuchen wird mit soviel Wasser angerührt, daß das Gewicht der Suspension 600 g beträgt. Nun gibt man 50 g Isobutanol 100 %ig zu und erhitzt 3 Stunden zum Sieden. Anschließend destilliert man das Isobutanol bis 100°C am Übergang ab, saugt bei 50°C ab, wäscht mit Wasser nach und trocknet bei 80°C. Man erhält 49,2 g Mischkristallpigment, dessen Röntgenbeugungsspektrum sich vom Röntgenbeugungsspektrum der entsprechenden mechanischen Mischung der oben genannten Ausgangsprodukte unterscheidet.

Im AM6-Lack erhält man mit dem Mischkristallpigment reine und farbstarke Lackierungen.

### Beispiel 9

Zu vorgelegten 2000 ml Wasser werden 120 g Natriumdithionit und 2 g eines handelsüblichen Dispergiermittels auf Basis Alkylphenolpolyglykolethersulfat zugegeben. In die erhaltene Lösung werden 40 g Dibromanthanthronrohpigment, hergestellt durch Bromierung von Anthanthron, und 40 g Dichloranthanthronrohpigment, hergestellt durch Chlorierung von Anthanthron, eingetragen. Man tropft bei 20 - 25°C 160 g Natronlauge 33 %ig zu, wobei sich ein pH-Wert von 12 einstellt. Nach einstündigem Nachrühren bei 20 - 25°C tropft man in 15 Minuten 47,8 g Phosphorsäure 85 %ig zu, bis sich ein pH-Wert von 10 - 11 eingestellt hat. Man rührt 1 Stunde bei 20 - 25°C nach und läßt dann bei pH 10 - 11 gleichzeitig 180 g Perhydrol 35 %ig und 98,4 g Natronlauge 33 %ig zutropfen. Nach beendetem Zulauf wird 15 Stunden bei 20 - 25°C nachgerührt, dann abgesaugt und schließlich neutral gewaschen.

Der so erhaltene Preßkuchen wird mit einer Lösung aus 48,9 ml Wasser und 5,6 g Natriumcarbonat wasserfrei angerührt. Nach Zugabe von 80 g Xylol wird 3 Stunden zum Sieden erhitzt. Anschließend wird das Xylol mit Wasserdampf abdestilliert, das Mischkristallpigment abgesaugt, neutral gewaschen und bei 80°C getrocknet.

Man erhält 78,6 g Mischkristallpigment, dessen Röntgenbeugungsspektrum sich vom Röntgenbeugungsspektrum der entsprechenden mechanischen Mischung der oben genannten Ausgangsprodukte unterscheidet.

Im AM6-Lack erhält man mit dem Mischkristallpigment transparente, helle und farbstarke Lackierungen.

## Patentansprüche

1. Mischkristallpigmente der Anthanthronreihe aus zwei oder mehr Verbindungen der allgemeinen Formel I 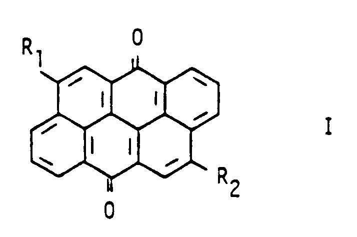 in welcher R₁, R₂ Wasserstoff, Chlor, Brom, Iod oder die Gruppen Nitro, Cyano, Amino, Hydroxy, C₁-C₄-Alkyl, C₁-C₄-Alkoxy, Aryloxy, das durch Halogen oder C₁-C₄-Alkyl substituiert sein kann, C₁-C₄-Alkylsulfonyl, Benzylsulfonyl, das durch Halogen oder C₁-C₄-Alkyl substituiert sein kann, Acetoxy, Anilino, das durch Halogen, C₁-C₄-Alkyl oder halogenhaltiges Alkyl substituiert sein kann, Naphthindonylamino oder Phthalimido bedeuten, wobei jede Komponente in einer Menge von 1 - 99 % vorliegt und R₁ und R₂ gleich oder verschieden sein können.

2. Mischkristallpigmente nach Anspruch 1, dadurch gekennzeichnet, daß R₁, R₂ Chlor, Brom, Iod, Methoxy oder Ethyoxy bedeuten, wobei R₁ und R₂ gleich oder verschieden sein können.

3. Mischkristallpigmente nach mindestens einem der Ansprüche 1 und 2, dadurch gekennzeichnet, daß eine der Komponenten in einer Menge von 70 bis 95 % vorliegt.

4. Verfahren zur Herstellung der in Ansprüchen 1 bis 3 genannten Anthanthronmischkristallpigmente, dadurch gekennzeichnet, daß man zwei oder mehr fein- oder grobkristalline Anthanthronrohpigmente oder grobkristalline Anthanthronmischkristallrohpigmente der genannten allgemeinen Formel I zunächst durch
(1) Umküpen aus wäßriger Lösung oder Suspension,
(2) Perlmahlung in Wasser oder Lösungsmitteln,
(3) Trockenmahlung mit oder ohne Salzzusatz,
(4) Auflösen in konzentrierter anorganischer Säure und Ausfällen durch Eingießen in Wasser,oder
(5) geeignete Syntheseführung,bei welcher die Reaktionsbedingungen so gewählt werden, daß die Anthanthronpigmente nach der Synthese gelöst vorliegen und durch Eingießen in Wasser ausgefällt werden,
in die entsprechenden feinteiligen Anthanthronmischkristallrohpigmente überführt und diese anschließend durch einen Finish in einem inerten organischen Lösungsmittel oder in einer verdünnten anorganischen Säure bei Temperaturen von etwa 50 bis etwa 200°C in die Anthanthronmischkristallpigmente der in Anspruch 1 genannten allgemeinen Formel I umwandelt.

5. Verfahren nach Anspruch 4, dadurch gekennzeichnet, daß man die Überführung der Ausgangsverbindungen in die entsprechenden feinteiligen Anthanthronmischkristallrohpigmente durch Umküpen aus wäßriger Lösung oder durch Perlmahlung in Wasser oder Lösungsmittel vornimmt.

6. Verfahren nach mindestens einem der Ansprüche 4 und 5, dadurch gekennzeichnet, daß man den Finish bei Temperaturen von etwa 80 bis 160°C durchführt.

7. Verfahren nach mindestens einem der Ansprüche 4 bis 6, dadurch gekennzeichnet, daß man den Finish in einem Alkanol von 2 bis 6 Kohlenstoffatomen, einem Xylol, Ethylbenzol, Cumol, Nitrobenzol oder Nitrophenol als inertem organischen Lösungsmittel durchführt.

8. Verfahren nach mindestens einem der Ansprüche 4 bis 6, dadurch gekennzeichnet, daß man den Finish in verdünnter Schwefelsäure durchführt.

9. Verfahren nach mindestens einem der Ansprüche 4 bis 8, dadurch gekennzeichnet, daß man den Finish in einem Rührgefäß oder unter Einwirkung von Scherkräften in Mahlapparaturen oder Knetaggregaten vornimmt.

10. Verfahren nach mindestens einem der Ansprüche 4 bis 9, dadurch gekennzeichnet, daß man Feinverteilungs- und Finishverfahren in Gegenwart oberflächenaktiver Verbindungen durchführt.

11. Verwendung der Mischkristallpigmente nach mindestens einem der Ansprüche 1 bis 3 zum Pigmentieren von hochmolekularen natürlichen oder synthetischen organischen Materialien.

## Claims

1. A mixed crystal pigment of the anthanthrone series formed from two or more compounds of the general formula I 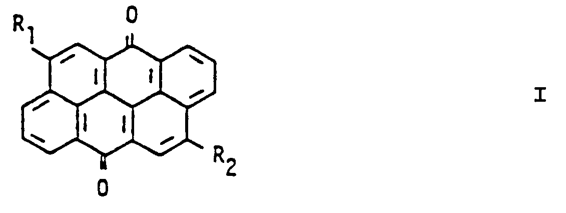 where R₁ and R₂ are each hydrogen, chlorine, bromine, iodine, nitro, cyano, amino, hydroxyl, C₁-C₄-alkyl, C₁-C₄-alkoxy, aryloxy, which may be halogen-substituted or C₁-C₄-alkyl-substituted, C₁-C₄-alkylsulfonyl, benzylsulfonyl, which may be halogen-substituted or C₁-C₄-alkyl-substituted, acetoxy, anilino, which may be halogen-substituted, C₁-C₄-alkyl-substituted or haloalkyl-substituted, naphthindonylamino or phthalimido, wherein each component may be present in an amount of from 1 to 99%, and R₁ and R₂ may be identical or different.

2. A mixed crystal pigment as claimed in claim 1, wherein R₁ and R₂, which may be identical or different, are each chlorine, bromine, iodine, methoxy or ethoxy.

3. A mixed crystal pigment as claimed in either or both of claims 1 and 2, wherein one of the components is present in an amount of from 70 to 95%.

4. A process for preparing a mixed crystal anthanthrone pigment as claimed in claims 1 to 3, which comprises first converting two or more finely or coarsely crystalline crude anthanthrone pigments or coarsely crystalline crude mixed crystal anthanthrone pigments of the general formula I mentioned by
(1) revatting from an aqueous solution or suspension,
(2) bead milling in water or solvents,
(3) dry grinding with or without salt,
(4) dissolving in concentrated inorganic acid and precipitating by pouring into water, or
(5) suitable synthesis management under reaction conditions chosen in such a way that after the synthesis the anthanthrone pigments are present in solution and are precipitated on pouring into water,
into the corresponding finely divided crude mixed crystal anthanthrone pigments and subsequently converting these by a conditioning treatment in an inert organic solvent or in a dilute inorganic acid at temperatures of from about 50 to about 200°C into the mixed crystal anthanthrone pigment of the general formula I mentioned in claim 1.

5. The process as claimed in claim 4, wherein the conversion of the starting compounds into the corresponding finely divided crude mixed crystal anthanthrone pigments is effected by revatting from an aqueous solution or by bead milling in water or solvent.

6. The process as claimed in either or both of claims 4 and 5, wherein the conditioning treatment is carried out at temperatures of from about 80 to 160°C.

7. The process as claimed in at least one of claims 4 to 6, wherein the conditioning treatment is carried out in an alkanol of from 2 to 6 carbon atoms, a xylene, ethylbenzene, cumene, nitrobenzene or nitrophenol as the inert organic solvent.

8. The process as claimed in at least one of claims 4 to 6, wherein the conditioning treatment is carried out in dilute sulfuric acid.

9. The process as claimed in at least one of claims 4 to 8, wherein the conditioning treatment is carried out in a stirred vessel or by the action of shearing forces in grinding or kneading apparatus.

10. The process as claimed in at least one of claims 4 to 9, wherein the dividing and conditioning processes are carried out in the presence of surface-active compounds.

11. The use of a mixed crystal pigment as claimed in at least one of claims 1 to 3 for pigmenting high molecular weight natural or synthetic organic materials.

## Revendications

1. Solution solide cristalline de pigments du type anthanthrone constituée de deux ou plusieurs composés de formule générale I 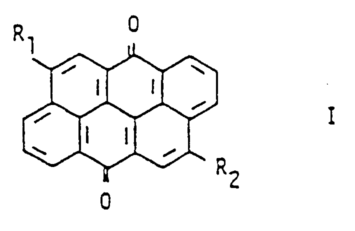 dans laquelle R₁, R₂ représentent l'hydrogène, le chlore, le brome, l'iode ou les groupes nitro, cyano, amino, hydroxy, alkyle en C₁-C₄, alcoxy en C₁-C₄, aryloxy, qui peut être halogéno- ou (alkyle en C₁-C₄) substitué ; un alkylsulfonyle en C₁-C₄, benzylsulfonyle qui peut être halogéno- ou (alkyle en C₁-C₄) substitué ; acétoxy, anilino qui peut être halogéno-, (alkyle en C₁-C₄) - ou (halogénoalkyle) - substitué ; naphtindonylamino ou phtalimido, chaque composant étant présent en une quantité de 1 à 99 % et R₁ et R₂ pouvant être identiques ou différents.

2. Solution solide cristalline de pigments selon la revendication 1, caractérisée en ce que R₁, R₂ représentent le chlore, le brome, l'iode, le méthoxy ou l'éthoxy, R₁ et R₂ pouvant être identiques ou différents.

3. Solution solide cristalline de pigments selon au moins une des revendications 1 et 2, caractérisée en ce qu'un des composants est présent en une quantité de 70 à 95 %.

4. Procédé pour préparer la solution solide cristalline de pigments du type d'anthanthrone citée dans les revendications 1 à 3, caractérisé en ce que l'on transforme tout d'abord deux ou plusieurs pigments bruts du type anthanthrone à cristaux fins ou grossiers, ou des pigments bruts du type anthanthrone, en solution solide cristalline à cristaux grossiers, lesquels pigments répondent à la formule générale donnée I, pour obtenir la solution solide cristalline brute de pigments divisée du type anthanthrone finement divisés correspondante, par
(1) transformation à la cuve à partir d'une solution ou d'une suspension aqueuse,
(2) broyage de perles dans de l'eau ou des solvants,
(3) broyage à sec avec ou sans addition de sel,
(4) dissolution dans un acide inorganique concentré et précipitation en versant dans de l'eau, ou
(5) mise en oeuvre d'une synthèse appropriée, dans laquelle les conditions de réaction sont choisies de telle sorte que les pigments du type anthanthrone se présentent à l'état dissous après la synthèse et sont précipités en versant dans l'eau, et en ce que ladite solution solide cristalline brute de pigments du type anthanthrone est ensuite transformée par un finissage, dans un solvant organique inerte ou dans un acide inorganique dilué, à des températures d'environ 50 à environ 200°C, en la solution solide cristalline de pigments du type anthanthrone de formule générale I donnée à la revendication 1.

5. Procédé selon la revendication 4, caractérisé en ce que la transformation des composés de départ en la solution solide cristalline brute de pigments du type anthanthrone finement divisée s'effectue par transformation à la cuve à partir d'une solution aqueuse ou par broyage de perles dans de l'eau ou dans un solvant.

6. Procédé selon au moins une des revendications 4 et 5, caractérisé en ce que l'on effectue le finissage à des températures d'environ 80 à 160°C.

7. Procédé selon au moins un des revendications 4 à 6, caractérisé en ce que l'on effectue le finissage dans un alcanol ayant de 2 à 6 atomes de carbone, un xylène, l'éthylbenzène, le cumène, le nitrobenzène ou le nitrophénol comme solvant organique inerte.

8. Procédé selon au moins une des revendications 4 à 6, caractérisé en ce que l'on effectue le finissage dans de l'acide sulfurique dilué.

9. Procédé selon au moins une des revendications 4 à 8, caractérisé en ce que l'on effectue le finissage dans un bac à agitation ou sous l'action de forces de cisaillement dans des appareils de broyage ou dans des aggrégats de pétrissage.

10. Procédé selon au moins une des revendications 4 à 9, caractérisé en ce que l'on effectue l'opération de division fine et l'opération de finissage en présence de composés tensio-actifs.

11. Utilisation de la solution solide cristalline de pigments selon au moins une des revendications 1 à 3 pour la pigmentation de matières organiques naturelles ou synthétiques à haut poids moléculaire.
